# EUROPEAN PATENT APPLICATION

(11) **EP 0 618 137 A1**
(43) Date of publication of application: **05.10.1994**
(21) Application number: 94100638.9
(22) Date of filing: 18.01.1994
(51) Int. Cl.: B65B 19/10, B65B 63/02, F16H 25/16

(54) **Compacting device for transversely bringing together fragile cylindrical products, particularly cigarettes, or similar**

(30) Priority: 26.02.1993 IT GE930013
(71) Applicant: SASIB S.p.A., I-40128 Bologna (IT)
(72) Inventor: Balboni, Alessandro, I-40057 Granarolo dell'Emilla, Bologna (IT); Paganini, Livio, I-44040 Corporeno, Ferrara (IT)
(74) Representative: Porsia, Bruno

(57) **Abstract**

A compacting device for transversely bringing together fragile cylindrical products, particularly cigarettes, or similar, and in cigarette packing machines, comprises a horizontal supporting surface (4) for at least one group (1, 1', 1'') of cigarettes (S), in which the cigarettes are placed side by side and substantially parallel to each other and with their ends aligned, and two members (6, 6') to press the cigarettes against each other, between which the group of cigarettes is interposed, and which are made to oscillate, in phase and in opposite directions to each other, transversely with respect to the longitudinal axis of the cigarettes (S), between a position of approach to each other and a position of withdrawal from each other. According to the invention, the two pressing members (6, 6') are driven in a constrained mode (12, 17, 17'), known as a positive mode, with only one degree of freedom, a single common cam (12) being provided to generate the approach and withdrawal of both the pressing members (6, 6'), by interacting with a pair of rollers (17, 17'), spaced apart, for each pressing member (6, 6').

## Description

The invention relates to a compacting device for transversely bringing together in a compact arrangement fragile cylindrical products, particularly cigarettes, or similar, for use in cigarette packing machines for example, comprising a horizontal supporting surface for at least one group of cigarettes, the cigarettes in the group being fed to and placed side by side on the said surface in a substantially parallel arrangement and with their ends substantially aligned with each other, between two members to press the cigarettes against each other, extending parallel to the axis of the cigarettes and over at least part of the length of the cigarettes, these pressing members being made to oscillate, in phase and in opposite directions to each other, transversely with respect to the longitudinal axis of the cigarettes lying side by side, and alternately between an extreme position of maximum approach to each other and a position of maximum withdrawal, each interacting with the outer side of the adjacent outer cigarette of the said group of cigarettes.

Compacting devices of this type are known and are used in cigarette packing machines. In these machines, stations are provided for the transfer of groups of cigarettes from a feed hopper to a conveyor cradle by which ordered groups of cigarettes lying on top of each other, perfectly aligned and brought together, are fed to the subsequent packing stations. At the transfer stations, the cigarettes are fed to a supporting surface which is substantially coplanar with a plurality of conveyor cradles which are made to advance by steps in front of the said supporting surface. The transfer from the supporting surface to the conveyor cradle takes place in the axial direction of the cigarettes, after these have been brought together in a compact arrangement and transversely with respect to their longitudinal extension by the action of the pressing members. The cigarettes are brought together to such an extent that the total transverse dimension of the group of cigarettes is slightly less than the size of the insertion aperture of the conveyor cradles. The feed of the groups of cigarettes and the movement of the pressing members is synchronized with the steps of advance of the conveyor cradles, which in turn are synchronized with the steps of the operating cycles of the subsequent operating units of the machine. For the conversion of the rotary motion of a driving motor to the oscillating motion of the pressing members, transmission systems are used which, in addition to being relatively expensive and complex, do not allow particular operating speeds of the packing machine to be exceeded, since beyond a certain limit speed the drive of the pressing members is no longer precisely controllable, there being a number of degrees of freedom of the motion of the pressing members, and the synchronization of the drive of the pressing members with the other operating units of the machine is longer ensured.

The invention is based on the problem of providing a compacting device of the type described initially, in which the oscillatory motion of the pressing members can be controlled precisely and positively even at high operating speeds, by using simple and relatively inexpensive constructional means.

The invention resolves the said problem with a compacting device of the type described initially in which the two opposing pressing members of the compacting device are driven in a constrained mode, known as a positive mode, with a transmission which has only one degree of freedom and which consists of a cam caused to rotate by a motor and common to both pressing members.

The pressing members are supported by oscillating levers which are pivoted on diametrically opposite sides of the axis of rotation of the common positive drive cam, and which carry, near the pivot axes and eccentrically with respect to the pivot axes, pairs of rollers interacting with the positive drive cam and spaced apart from each other on opposite sides of the plane passing through the pivot axes and the axis of rotation of the positive drive cam, while the cam is made in such a way that all the rollers always bear on the surface of the cam and the rotation of the cam causes alternating oscillation in the direction of lesser or greater separation of the oscillating levers, in other words a direction of approach or withdrawal of the pressing members.

The cam is advantageously shaped in such a way that, with a bidirectional rotary movement about its central axis between two extreme angular positions, it alternately causes maximum approach of the pressing members in one of the two extreme positions and maximum withdrawal of the pressing members in the other of the extreme positions.

According to a preferred embodiment, the cam consists of three circular sectors of identical lesser radius and three further sectors of identical greater radius, these sectors being joined together peripherally without solution of continuity and distributed over the cam alternately with respect to the size of the radius and at substantially equal intervals, so that, in an extreme angular position of the cam, the rollers of both pairs of rollers, each of which is associated with one of the pressing members, lie, in the case of the first of the said rollers of each pair, against sectors of lesser radius, and, in the case of the second of the said rollers of each pair, against sectors of greater radius, while in the other extreme position the first rollers interact with sectors of greater radius and the second with sectors of lesser radius.

The cam drive is provided by a stepping motor, directly or through a transmission, and includes a brief stop at the points of reversal of the oscillatory motion of the cam, in other words at the extreme angular positions of the cam.

The angular amplitude of the oscillatory motion of the cam is advantageously slightly greater than the angular distance between two adjacent circular sectors, preferably corresponding to an angular amplitude between an intermediate point of one and an intermediate point of the other of the said adjacent sectors.

The oscillatory motion of the pressing members therefore has only one degree of freedom, and the pressing members are precisely guided both when approaching and when withdrawing from each other. In spite of the great simplicity of construction, this efficiently eliminates the play and delay found in the devices currently used in the conversion of rotary to alternating motion, which cause imperfect synchronization of the operation of the pressing members with respect to each other and to the other operating units of the machine, imposing serious limitations on the maximum operating speed of the machine.

The invention also relates to other characteristics which further improve the compacting device described above, and which are the subject of the subsidiary claims.

The particular characteristics of the invention, and the advantages derived therefrom, will be more clearly understood from the description of a preferred embodiment, illustrated by way of example and without restriction in the attached drawings, in which
Fig. 1 is a front view of a station for feeding ordered and compacted groups of cigarettes to a cradle conveyor system in a cigarette packing machine;
Fig. 2 is an enlarged section through a plane transverse with respect to the direction of travel of the conveyor cradles of the station as shown in Fig. 1;
Fig. 3 is an enlarged and partially sectional detail of a compacting device used in the station shown in the preceding figures;
Fig. 4 is an enlarged section through the line IV-IV in Fig. 2; and
Figs. 5 and 6 are schematic enlarged views of a preferred embodiment of the cam in the two extreme angular positions of its oscillatory motion respectively.

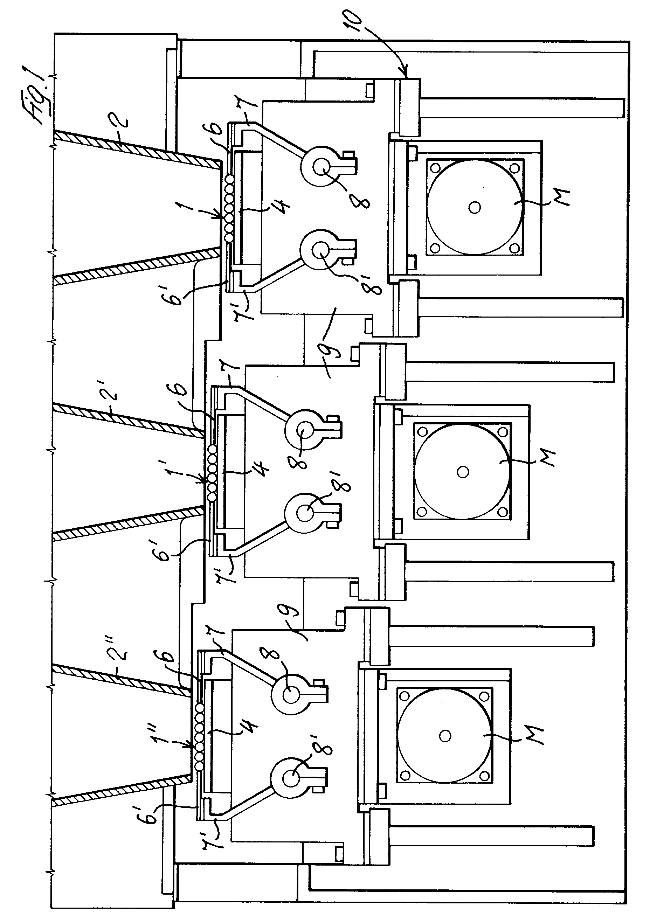

Fig. 1 shows the transfer stations where three ordered groups 1, 1', 1'' of cigarettes from the same number of feed hoppers or outlets of a common feed hopper 2, 2', 2'' are transferred to a conveyor cradle 3. The cigarettes S of each group are disposed side by side and parallel to each other and with their ends aligned on a horizontal supporting surface 4. The supporting surfaces 4 of the groups of cigarettes 1, 1', 1'' are disposed at different levels, being out of vertical alignment substantially by an amount corresponding to the diameter of the cigarettes S. A plurality of conveyor cradles 3 is made to pass in front of the groups of cigarettes 1, 1', 1'' along a path running transversely with respect to the cigarettes and out of axial alignment with them. Each conveyor cradle 3 holds three vertically stacked ordered groups of cigarettes 1, 1', 1'' and is made to move by steps in front of each group of cigarettes 1, 1', 1''. The conveyor cradles 3 supply the cigarettes necessary for the formation of a pack, in an ordered way in the disposition which they will have in the finished pack, to the following packing stations of the packing machine.

To form the groups of cigarettes 1, 1', 1'', a predetermined number of cigarettes S is made to fall on to a horizontal supporting surface 4, preferably in a position where they are already side by side and substantially parallel to each other and aligned with respect to their ends. Before being pushed into the cradle 3 by a horizontal pusher 5 movable axially with respect to the cigarettes S, the cigarettes must be brought together side by side in a compact arrangement. The cigarettes are brought together to such an extent that the total transverse dimension of the group of cigarettes 1, 1', 1'' is slightly less than the size of the insertion aperture 103 provided at the end of the conveyor cradle 3 facing the cigarettes S.

For this purpose, two pressing members 6, 6', each of which consists of a horizontal blade or strip, whose free edge is parallel to the direction of transfer into the cradle 3, i.e. to the axis of the cigarettes S when brought together, are provided on both the outer sides of each group 1, 1', 1'' of cigarettes S which are parallel to the longitudinal extension of the cigarettes. The pressing members 6, 6' are movable, in phase with each other and in opposite directions to each other, substantially parallel to their horizontal extension and transversely with respect to the axis of the cigarettes S, alternately between a position of maximum approach, in which the cigarettes S are brought together in a compact arrangement, and a position of maximum withdrawal, coinciding with the feed of the cigarettes S of a new group.

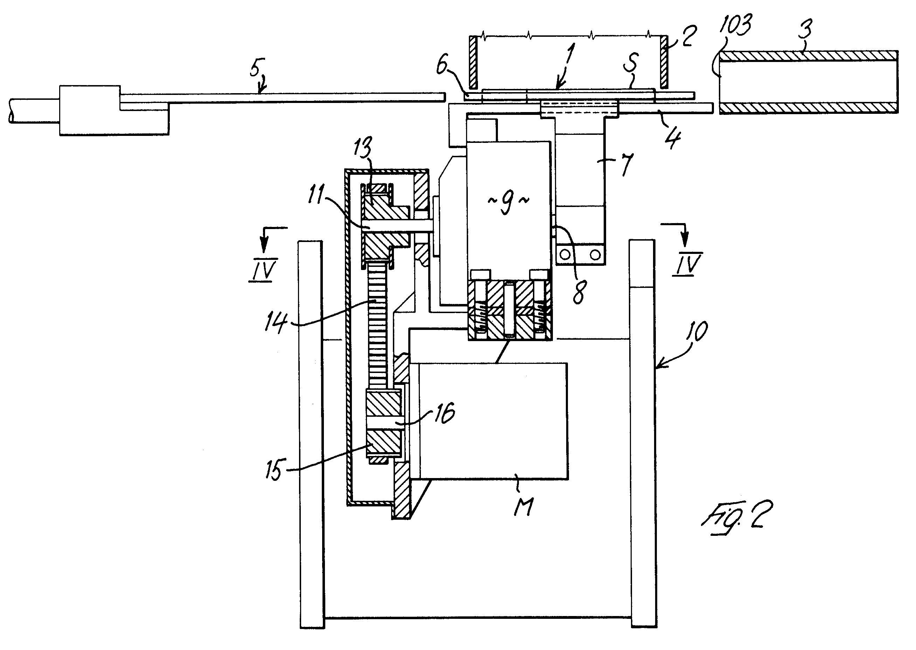

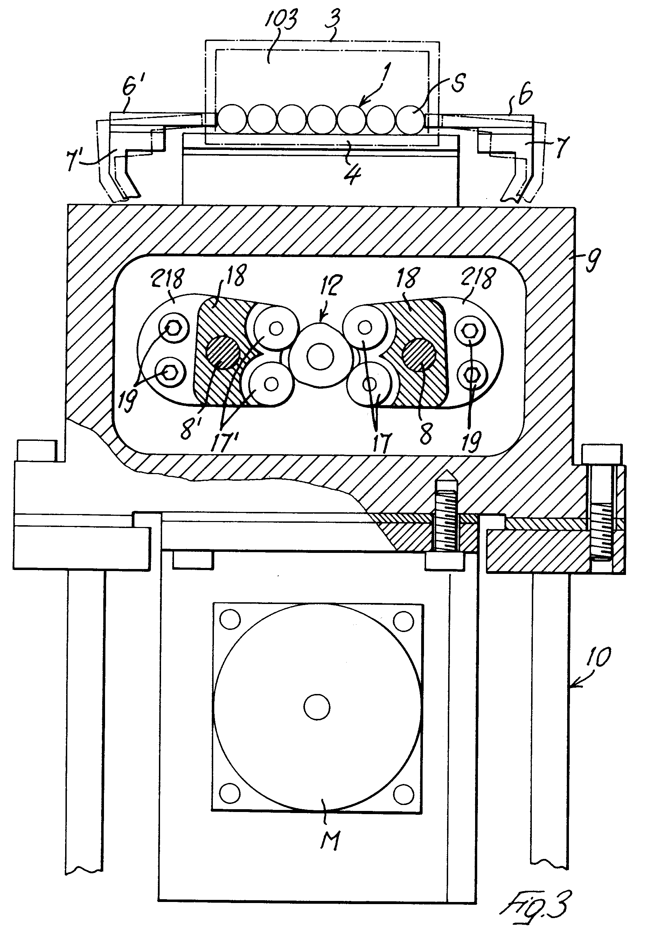

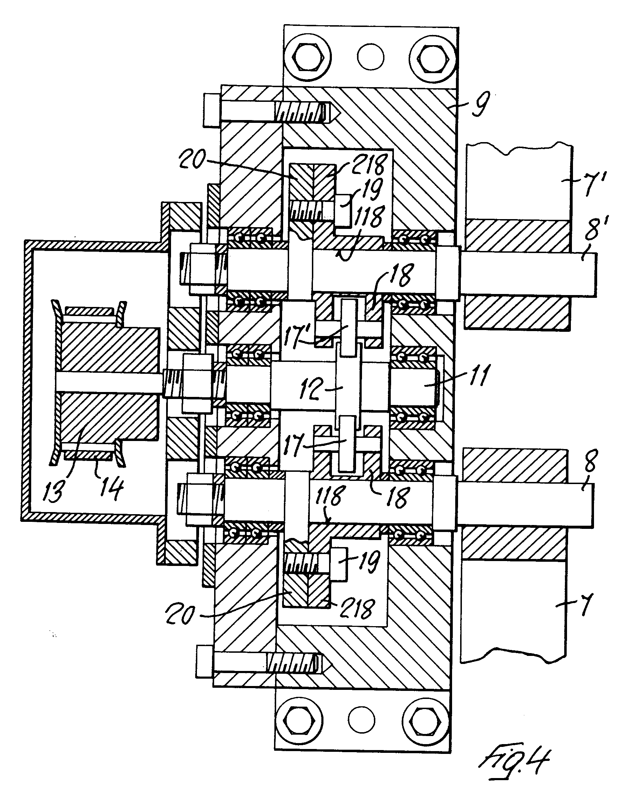

As shown also in Figs. 2 and 3, each of the pressing members is supported by a lever 7, 7' which is pivoted at its lower end so that it oscillates in a vertical plane, transversely with respect to the axis of the cigarettes S. The ends of the said oscillating levers 7, 7' are fixed to shafts 8, 8' which are axially parallel to the cigarettes S, and which are supported so that they can oscillate in a casing 9 of a converter of the continuous rotary motion into oscillatory motion, this casing being supported by the frame of the machine 10. The two shafts 8, 8' of the two oscillating levers 7, 7' are disposed so that they are coplanar with each other and on diametrically opposite sides of a parallel and coplanar driving shaft 11. As shown in particular in Fig. 4, the driving shaft 11 is supported rotatably in the casing 9 and projects outside the casing, preferably on the opposite side from the shafts 8, 8'. On its outer end it carries a pulley 13 around which runs a transmission belt 14 which is driven by the pulley 15 carried by the shaft 16 of the motor M. The motor is preferably a stepping motor. Alternatively, the driving shaft 11 may be driven directly by the motor M.

As shown in Fig. 4, a coaxial cam 12 is fixed on the driving shaft 11 inside the casing 9. The cam 12 interacts, on the sides facing the shafts 8, 8', with a pair of rollers 17, 17' for each shaft 8, 8'. The rollers 17, 17' of each pair are spaced apart vertically, one above and the other below the common horizontal plane passing through the axes of the shafts 8, 8' and of the driving shaft 11. Each pair of rollers 17, 17' is supported eccentrically towards the cam 12, with respect to the axis of the corresponding shaft 8, 8', on a forked plate 18. The forked plate 18 is fitted on to the shaft 8, 8' by means of a hole 118 and has on its side diametrically opposite the rollers 17, 17' a half flange 218, by which it is fixed with screws 19 to a half flange 20 integral with the shaft 8, 8'.

With reference to Fig. 3 in particular, the cam 12 is made in such a way that the rollers 17, 17' of each pair associated with the shafts 8, 8' always bear on the cam. The two levers 7, 7' therefore carry out a constrained movement in both directions of oscillation and with respect to each other. They have a single degree of freedom for the execution of their oscillatory movement.

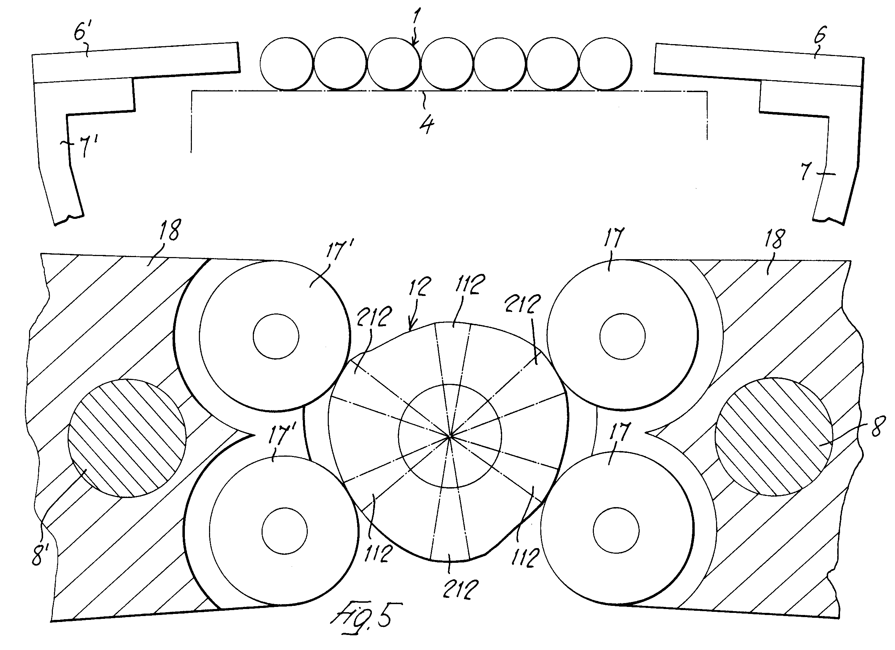

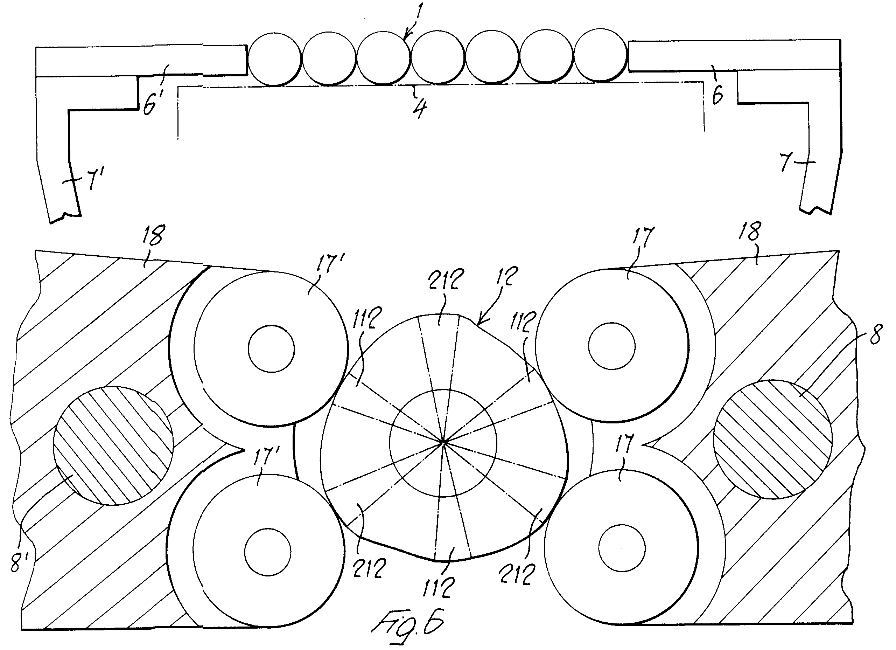

To obtain the desired movements of the pressing members 6, 6', it is preferable to use a cam 12 such as that illustrated in Figs. 5 and 6. The said cam 12 consists of three circular sectors of identical lesser radius 112 and three circular sectors of identical greater radius 212. The sectors 112, 212 are distributed alternately on the cam. Their angular amplitudes are substantially identical with each other and the total of these amplitudes is less than a round angle. The sectors 112, 212 are also distributed at substantially equal angular intervals and are joined together at the periphery without solution of continuity. As shown clearly in Figs. 5 and 6, at the extreme angular position of the cam 12 corresponding to the condition of maximum withdrawal of the pressing members 6, 6', the cam 12 is rotated so that the rollers 17, 17' of the two pairs which are disposed on the side of the corresponding shafts 8, 8' facing the pressing members 6, 6' interact simultaneously with sectors of greater radius 212, while those on the opposite side of the corresponding shafts 8, 8' interact with sectors of lesser radius 112. The oscillation of the cam 12 to the other extreme position in Fig. 6, corresponding to the condition of maximum approach of the pressing members 6, 6', causes the inversion of the disposition described above and shown in Fig. 5, so that the rollers 17, 17' on the sides of the shafts 8, 8' facing the pressing members 6, 6' interact with sectors of lesser radius 112 and those on the opposite side of the shafts 8, 8' interact with sectors of greater radius 212. From the geometry illustrated in Figs. 5 and 6, it follows that each pair of rollers 17 always interacts with the same three sectors 112, 212. One of the two pairs of rollers 17 is associated with, for example, two sectors of greater radius 212, each designed to interact with the adjacent roller, and a sector of lesser radius 112 interposed between the two sectors of greater radius 212 and interacting alternately with first one and then the other roller of the associated pair 17. The configuration of the three sectors 112, 212 interacting with the opposite pair of rollers 17' is inverted with respect to the first as regards the radii of the sectors.

According to an advantageous improvement to avoid operating problems due to angular errors in the rotation of the motor M, pauses in the movement driving the pressing members are provided at the extreme angular positions of the range of oscillation of the cam 12 where the reversal of motion takes place. Additionally, the extreme angular positions of the cam 12 are chosen in such a way that the rollers 17, 17' of the two pairs coincide with intermediate, preferably median, points of the corresponding sectors 112, 212. The angular amplitude of the oscillatory motion of the cam 12 is therefore greater than the angular distance between two adjacent sectors 112, 212, and preferably corresponds substantially to the angular distance between two intermediate, especially two median, points of two adjacent sectors 112, 212.

When the oscillatory motion of the pressing members 6, 6' is generated in this way, the compacting device can be driven even at high operating speeds without the possibility of the development of synchronization errors either between the two pressing members 6, 6' of each compacting device or between the device and the other operating units of the machine, such as the conveyor cradles 3 or the pusher 5, etc.

As is clearly shown in Fig. 1, each compacting device of each transfer station is driven separately by its own motor M.

## Claims

1. Compacting device for transversely bringing together fragile cylindrical products, particularly cigarettes, or similar, for use in cigarette packing machines for example, comprising a horizontal supporting surface (4) for at least one group (1, 1', 1'') of cigarettes (S), the cigarettes in the group being fed to and placed side by side on the said surface (4) in a substantially parallel arrangement and with their ends substantially aligned with each other, between two members (6, 6') to press the cigarettes against each other, extending parallel to the axis of the cigarettes and over at least part of the length of the cigarettes, these pressing members (6, 6') being made to oscillate, in phase and in opposite directions to each other, transversely with respect to the longitudinal axis of the cigarettes (S) lying side by side, and alternately between an extreme position of maximum approach to each other and a position of maximum withdrawal, each interacting with the outer side of the adjacent outer cigarette of the said group (1, 1', 1'') of cigarettes (S), characterized in that the two opposing pressing members (6, 6') of the compacting device are driven in a constrained mode (12, 17, 17'), known as a positive mode, with a transmission which has only one degree of freedom.

2. Device according to Claim 1, characterized in that the positive transmission consists of a driving cam (12) caused to rotate by a motor (M) and common to both pressing members (6, 6').

3. Device according to Claim 1 or 2, characterized in that the cam (12) is shaped in such a way that, with a bidirectional rotary movement about its central axis between two extreme angular positions, it alternately causes maximum approach of the pressing members (6, 6') in one of the two extreme positions and maximum withdrawal of the pressing members (6, 6') in the other of the extreme positions.

4. Device according to one or more of the preceding claims, characterized in that the pressing members (6, 6') are supported by oscillating levers (7, 7') which are pivoted on diametrically opposite sides of the axis (11) of rotation of the common positive drive cam (12), each lever carrying, eccentrically with respect to the pivot axis (8, 8'), on the side facing the cam (12), a pair of rollers (17, 17') interacting with the cam and spaced apart from each other on opposite sides of the plane passing through the pivot axes (8, 8') and the axis of rotation (11) of the positive drive cam (12), while the cam (12) is made in such a way that all the rollers (17, 17') always bear on the surface of the cam and the rotation of the cam causes alternating oscillation in the direction of lesser or greater separation of the oscillating levers, in other words a direction of approach or withdrawal of the pressing members (6, 6').

5. Device according to one or more of the preceding claims, characterized in that the cam (12) consists of three circular sectors of identical lesser radius (112) and three further sectors of identical greater radius (212), these sectors being joined together peripherally without solution of continuity and distributed over the cam (12) alternately with respect to the size of the radius and at substantially equal intervals, so that, in an extreme angular position of the cam (12), the rollers (17, 17') of both pairs of rollers, each of which is associated with one of the pressing members (6, 6'), lie, in the case of the first of the said rollers (17, 17') of each pair, against sectors of lesser radius (112), and, in the case of the second of the said rollers (17, 17') of each pair, against sectors of greater radius (212), while in the other extreme position the first rollers interact with sectors of greater radius (212) and the second with sectors of lesser radius (112).

6. Device according to one or more of the preceding claims, characterized in that the cam (12) drive is provided by a stepping motor (M), directly or through a transmission (13, 14, 15), and includes a brief stop at the points of reversal of the oscillatory motion of the cam (12), in other words at the extreme angular positions of the cam.

7. Device according to one or more of the preceding claims, characterized in that the angular amplitude of the oscillatory motion of the cam (12) is slightly greater than the angular distance between two adjacent circular sectors (112, 212), preferably corresponding to an angular amplitude between an intermediate point of one and an intermediate point of the other of the said adjacent sectors (112, 212).

8. Device according to Claims 1 to 7, characterized in that it is used in stations for successive transfer into a conveyor cradle (3), in a number of stacked layers, of a number of groups (1, 1', 1'') of cigarettes (S), each consisting of a certain predetermined number of cigarettes (S) lying side by side in a horizontal plane (4) and with their ends aligned, each layer consisting of a group of cigarettes (1, 1', 1'') fed from a hopper (2, 2', 2'') to a supporting surface (4) of a transfer station which is at a level above the supporting surface (4) of the transfer station for the preceding or subsequent group (1, 1', 1'') of cigarettes (S), a compacting device driven by its own motor (M) being associated with each station.
